# EUROPEAN PATENT SPECIFICATION

(11) **EP 1 114 560 B1**
(45) Date of publication and mention of the grant of the patent: **15.07.2009**
(21) Application number: 99951330.2
(22) Date of filing: 17.09.1999
(51) Int. Cl.: H04M 3/54, H04Q 3/62

(54) **A SYSTEM OF TELECOMMUNICATION**
EIN TELEKOMMUNIKATIONSSYSTEM
SYSTEME DE TELECOMMUNICATIONS

(30) Priority: 18.09.1998 SE 9803174
(43) Date of publication of application: 11.07.2001
(73) Proprietor: Trio AB, 113 85 Stockholm (SE)
(72) Inventor: KJELLQUIST, Staffan, Lars, Allan, S-183 38 Täby (SE)
(74) Representative: Hopfgarten, Nils
(86) International application number: PCT/SE1999/001623
(87) International publication number: WO 2000/018147

(56) References cited:
- EP-A2- 0 909 079
- WO-A1-97/18662
- WO-A2-97/38518
- WO-A2-99/53717
- GB-A- 2 287 610

## Description

### Field of Invention

The present invention relates to a telecommunications system and then more particularly to a telecommunications system that is includes in or that itself includes a general or public telecommunications network, among other things.

A general telecommunications network includes, among other things a plureality of telephone sets, wherein a calling telephone set is able to initiate and thereby establish a connection with a called telephone set belonging to the telecommunications network, through the medium of a switching means.

By telephone set or telephone set belonging to the telecommunications network shall be understood primarily as meaning a subscriber-connected telephone set, which may include tone dialing functions. The term telephone set may also include telephone exchanges and switching means

According to the invention, the telecommunications system also utilises a private branch exchange function or means (PBX-function) that is either related to or integrated with the telecommunications network

This private branch exchange function or means may be implemented beneficially as a private branch exchange that is connected to the telecommunications network through the medium of inward tines.

By private branch exchanges is meant primarily in the present context a large, operator-manned exchange that incorporates service-adapted functions or services.

The exchange is assumed to have a plurality of outward ports or lines related to extension telephone sets, where said ports or lines can be connected to inward ports or tines for equipment that includes call switching functions, among other things.

The expressions outward and inward ports or lines shall bye seen symbolically and include every means whereby information exchange is appropriate and that the call direction given has merely been chosen with a view to clarification.

### Description of the Background Art

Several different types of telecommunications systems of the aforesaid nature are known to the art.

Telecommunications systems that include large operator-manned private branch exchanges connected to the public telecommunications network, are also known.

The reason why private branch exchanges are connected to the general or public telecommunications network is because such a public branch exchange is able to provide greater services to an extension related telephone set of the branch exchange than the telecommunications network, itself including services that are adapted more directly to the needs of these collective extension telephone sets.

Moreover, the number of sines that can be used between a private branch exchange and a telecommunications system are greatly reduced.

In addition to connecting a private branch exchange to the public telecommunications network via telephone lines, it is also known to incorporate a private branch exchange function in the public telecommunications network and to allow network-connected telephone sets to serve as extension telephone sets belonging to the private branch exchange.

In the case of the aforesaid two private branch exchange means and functions applications, it is also known to connect to the private branch exchange equipment that provides an audio response system and also other services, with the intention of increasing the number of service options that can be provided for the branch exchange extension telephone sets.

Although such items of equipment can well be incorporated physical in a private branch exchange, it is nevertheless usual for such items of equipment to form separate tine-interconnected units.

Private branch exchanges of this kind, i.e. large private branch exchanges, normally include and outward ports, that are adapted for digital and/or analog signals whereby information concerning extension telephone set is received on outward ports.

For instance, it is known to structure the outward port signals in accordance with a CAS protocol, wherewith each extension telephone set is allocated an outward port, in the form of a time slot.

The exemplifying embodiment frustrating the present invention shows that a number of exchange outward ports, one port for each extension telephone set, is coupled to a corresponding number of equipment inward ports, via a coaxial cable.

Such equipment that provides an audio response system and also switching functions among other things is known to the art by virtue of equipment marketed by Trio AB, Täby, Sweden, under the trade name Televoice-.

Several different types of large private branch exchanges that can be connected to a general telecommunications network are known to the art. A private branch exchange, suitable with respect to the present invention, is retailed under the designation "M 110" by Ericsson Stockholm Sweden.

Earlier known, equipment and private branch exchanges of the kind intended here are complex in themselves, and consequently the following description has been restricted solely to exchange features required by the invention.

It is also known to allow an equipment to include a number of services, or to include a number of services in coaction with functions in the private branch exchange, either with or without the assistance of a telephone operator.

For the sake of simplicity, only a few services will be discussed in the following description, for instance services such as temporary transfers, follow-me diversions, and interception services for instance, although the person skived in this art will be aware that other services may be exploited in a similar way.

One example of such a further service is the ACD service (Automatic call Distribution), where calls to and intended for one and the same group, such as telephone operators, are controlled for distribution equally to all telephone operators within the group.

With respect to significant features of the present invention, lit can also be mentioned that it is known to transfer or divert calls that are intended for an extension telephone set, connected directly to the private branch exchange,to a peripheral subscriber-connected telephone set belong to the public telecommunications network by means of a transfer or diversion service, provided by said branch exchange, wherein said peripheral telephone set is able to function as a peripheral extension line to the private branch exchange for the duration of the call transfer service.

Such a extension telephone set is adapted to solely receive transfer calls from the private branch exchange and has a very limited function with respect to further use as an extension telephone set belonging to the telephone exchange.

However, it is necessary to distinguish a temporary transfer connection from the connection of a peripheral extension telephone set to the telecommunications network, as applicable in accordance with the invention.

It is also known to provide a service (Centrex) in the public telecommunications network, with which selected telephone sets affiliated with said telecommunications network are also allocated extension telephone set functions within a "Centrex" service

In the case of very high traffic loads, it is also known to connect a fixed leased line between two subscribers, A leased line is quite expensive and is therefore only justified economically in the case of very high traffic loads.

It is to be noted that alternative prior art is to be found in the following patent publications.

Publication WO-A2-97/38 518 discloses a system and a method which provides connectivity between one or more remote users and a corporate office, wherein the remote users have a "Virtual presence" at the corporate office, including access to the facilities and features provided by the corporate office related telephone system and local area network.

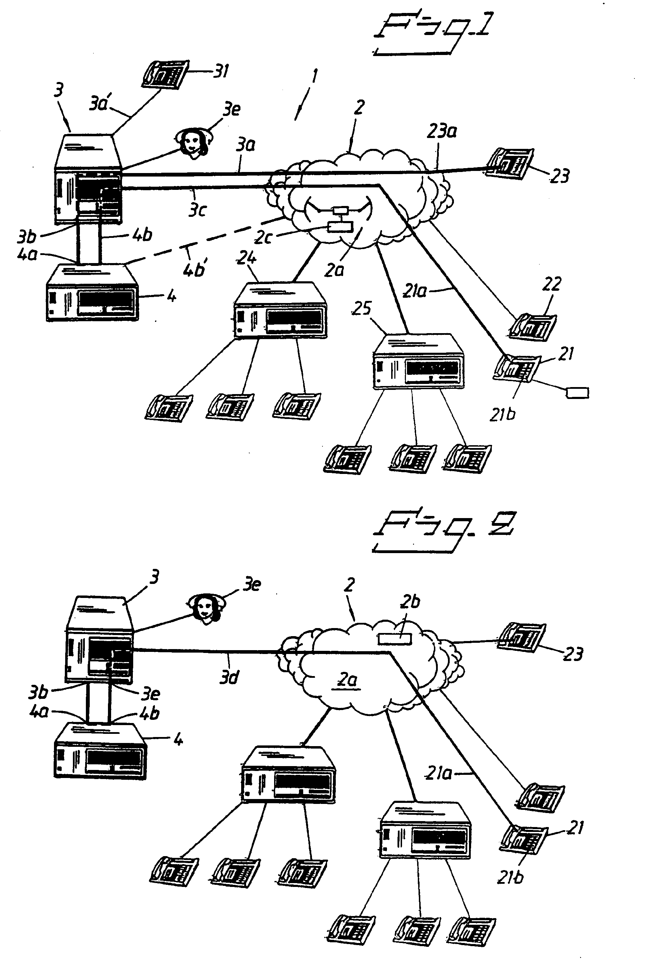

It is here suggested that data technique (and a data equipment or unit) has been integrated in the peripheral extension and the telephone set is directly related to said data equipment (104 in Figure 2).

### (The,present invention does not expose any use of data equipment at the peripheral extension).

Publication GB-A- 2 287 610) states, that most modern private telephone systems - known as, Private Automatic Branch Exchanges (or PABX's) - provide many more facilities than do the normal public telephone systems. Unfortunately, while some of the latest public exchanges have a limited number of these facilities, they are nevertheless severely restricted by comparison with PABX's.

A control means (12), suitable for analogue-to-analogue calls, is shown in Figure 2. The control means (12) includes an analogue line (XY) connected at one end (X) to the public network (PTN₁ in Figure 1) and at the other end (Y) to the private network (P in Figure 1).

The line (XY) contains an audio link with a DC isolation barrier (1), (this may also contain amplification and echo-suppression circuitry).

On each side, ringing detectors (2, 3) are provided to detect ringing current being sent from either end, which detectors respond by closing a DC path (4, 5) on either side of the isolation barrier (1).

A time-out device (6) can subsequently open these paths: in addition, the path may be opened by the detection of an audio signal or by some specific pre-defined DC line conditions at either end.

The control means (12) also incorporates control signal detect means (7) that detects the "code" signal used to indicate a "Recall", and this triggers a Recallsignal generator (8), from which a Recall signal can be fed to the output line (at X) and hence to the private network (P), to cause it to be alert for any subsequent command signal.

In a version using ISDN - that is, the public network PTN₁ is a digital one - there will be an ISDN terminal adapter between the analogue end X of the Figure 2 control means (12) and the digital public network.

*(The present invention discloses switching means of, equipment) and means for routing in-and outgoing traffic in the form of speech communication)*

WO 97/38 518 is directed towards the printed line card, used in a PBX-equipment, by introducing CM-units (58, 60, 62, 64, 68 in Figure 1).

### Summary of the Invention

### Technical Problems

When taking into consideration the technical deliberations that a person skilled is this particular art must undertake in order to provide a solution to one or more technical problems that he/she encounters, it will be seen that on the one hand it is necessary initially to realise the measures and/or the sequence of measures that must be implemented to this end and on the other hand to realise which means is/are required to solve one or more of these problems.

On this basis, it will be evident that the technical problems listed below are highly relevant to the development of the present invention.

When considering the present state of the art, as described above, it win be evident that a technical problem resides in creating, with the aid of simple means, conditions which enable an extension telephone set, associated with a public branch exchange function, to be placed peripherally in relation to other direct dialing exchange extension telephone sets, and therewith be separated connection-wise from direct access to said exchange, but where said peripheral extension telephone set can still be afforded access to all services provided by the exchange, or at least substantially all such services, and measures conditions which will enable such a peripheral extension telephone set belonging to said exchange to be connected through the general telecommunications network and therewith allow each peripheral person served by the extension telephone set to be located physically anywhere within the total range of the network without the person concerned needing to refrain from accessing the significant service functions afforded by the public branch exchange, and creating conditions which will enable ready access to interception functions to be provided in the private branch exchange and/or provided with the aid of said equipment without needing to lease lines or some other fixed connection.

Still another problem is one of providing with the aid of simple means conditions that will enable a peripheraly connected extension tetephone set to be readily connected to the public telecommunications network in addition to being readily connectable to the branch exchange receiver means for the extension concerned.

There is a technical problem to provide, within a telecommunication system that includes; a generally telecommunication network
to which a number of telephone sets are connected, and in which a calling telephone set is able to initiate and establish via network related switching means a connection with a called telephone set, a private branch exchange means or function related to the telecommunications network, said function capable of being connected, via an outward extension telephone port or line, to an inward port or line for an equipment whereby peripheral extension telephone set, belonging to said branch exchange means or function and to said equipment is connected to the telecommunications network, as a network adapted telephone set to introduce an unique equipment, that includes switching functions and an equipment-related outward port or line (4b) connected via said private branch exchange means or function or directly to the telecommunications network, so that branch exchange services can be offered to said periphéral extension telephone set.

Despite the positioning of a peripheral extension telephone set and its connection to the telecommunications network, a technical problem nevertheless exists in creating conditions that will ensure that the private branch exchange has, and will be able to obtain within the storage areas of the branch exchange, at least substantially all information relating to the status of the peripheral extension telephone set, and to enable the peripheral extension telephone set to transfer or divert to the private branch exchange and/or its telephone operator/operators each requested service function of said exchange in a simple manner and on equal terms with a direct dialing extension telephone set.

Another technical problem resides in realising the simplifications that can be obtained by allowing such a peripheral extension telephone set to be easily connected to the telecommunications network, such as a subscriber telephone set adapted to said network, and still provide with the aid of a connection set-up through or within the telecommunications network all options to the selection of different services that can be offered through an operator-manned private branch exchange.

With respect to an application of this nature, a technical problem resides in the significance of choosing for this particular application a private branch exchange that has ports and interfaces suitable for said application and to adapt outward ports or lines for said equipment for direct connection to the telecommunications network or indirect connection via the branch exchange.

Another technical problem is one of creating with the aid of sample means and through the medium of the telecommunications network conditions which will enable the peripheral extension telephone set to be connected with its own inward circuit for the branch exchange via a call, and to listen to or monitor a branch exchange dialing tone via a communication path connected through the network, and to transfer to said branch exchange via said communications path such extension telephone set control signals as e.g. the telephone number of the extension concerned, the telephone number of the telephone set associated with the telecommunications network, signals requesting or cancelling one or more interception services, call forwarding services and/or other branch exchange services, and to adapt the private branch exchange to establish a desired connection with, or to implement, a requested service, either direct or via said equipment, in a known manner.

In the case of a renewed connection with the branch exchange inward circuit from an intercepted or forwarded peripheral extension telephone set via a communications path set up in the network, another technical problem is one of being able to monitor or listen to a branch exchange dialling tone and also to a chopper tone to call attention to the fact that a connected service is on hand and has been activated,

If the telecommunications network requires a B-response in respect of a control signal exchange via such a connection, the private branch exchange shall be adapted to be able to receive extension telephone set signals subsequent to the B-response being delivered to circuits within the telecommunications network.

In respect of the use of a private branch exchange that includes inward ports and outward ports, it will be seen that a technical problem resides in the ability to realist those advantages that are afforded when said outward ports, on which there is applied a signal structure where each extension telephone set is allocated information significant to said telephone set within an own time slot, are connected to equipment inward ports and thereby create conditions which enable information significant to said extension telephone set to be transferred or diverted readily to said equipment.

It will also be seen that a technical problem resides in realising the significance of enabling an inward call to be connected via said equipment to a sound (audio) channel belonging to the telecommunications network, such as to deliver to the casing telephone set tone or speech messages that can be generated within the telecommunications network

In the case of a telecommunications network with which a control-signal adapted connection can be set up between the equipment and the peripheral extension telephone set without generating a B-response, another technical problem resides in the realisation that said equipment shall be adapted to receive control signals belonging to the extension telephone set without generating a B-response to circuits in the telecommunications network.

If the telecommunications network requires a B-response for such control signals the equipment shall be adapted to be able to receive signals belonging to said extension telephone set subsequent to the requisite B-response to the telecommunications network.

When a requested service is stored in the exchange memory area for the peripheral extension telephone set concerned, such as a call forwarding service or an interception service, a technical problem resides in realising the significance of and the advantages afforded by enabling means belonging to the private branch exchange to implement the measures required in respect of said requested service in the event of a call to tile peripheral extension telephone set being received by the branch exchange, wherewith a requested service directed solely to the branch exchange is performed by said exchange, for instance a request for the call to be forwarded to a direct dialling extension telephone set.

It will also be seen that a technical problem resides in realising the significance of enabling a connection to be established through the telecommunications network via said equipment and therewith connect a call from the private branch exchange intended for the peripheral extension telephone set to a sound channel belonging to the telecommunications network, therewith enabling tone or speech messages that can be generated within the telecommunications network to be switched to the calling telephone set.

This can also be effected either with or without a B-response.

It will also be seen that a technical problem resides in the significance of and the advantages that are afforded by allowing the peripheral extension telephone set belonging to the private branch exchange and connected to the telecommunications network to utilise a network function, namely a function that will automatically and immediately establish a connection through the telecommunications network with a pre-programmed number belonging to said branch exchange and/or forward said call to said equipment, in response to lifting the telephone receiver or the like.

Another technical problem is one of ensuring, with the aid of simple means, that the pre-programmed number in the private branch exchange will establish a connection between the peripheral extension telephone set and its inward circuits associated with the branch exchange, so as to enable a branch exchange dialing tone to be transmitted to the peripheral extension telephone set.

A technical advantage is gained by electing to establish the switching path to the equipment via the branch exchange, so that a switching path established between a peripheral extension telephone set and the equipment can be exploited to transmit control-signal related information.

Another technical problem is one of realising the significance of allowing the equipment to ascertain which extension telephone set or which calling telephone set is the calling telephone set, for instance by evaluating a direct dialling number or by evaluating a relevant A-number.

The present invention also enables each peripheral extension telephone set that calls the branch exchange via an established connection and through the medium of a telephone keyset, to activate one or more codes that represent a temporary transfer or follow-me diversion, an interception, or some other desired exchange function or service, and to enable these services to be stored in the exchange storage area. Moreover, the peripheral extension telephone set can be offered the function in the telecommunications network that corresponds to depression of an R-button, by activating and sending over a connection a code combination corresponding to the R-button and discernible solely in the branch exchange and/or said equipment.

Another technical problem is one of realising the significance of and the advantages that are afforded by inhibiting said function of automatically activating a connection to a pre-programmed branch exchange number when lifting the receiver of the handset concerned, by dialling a code such as to connect the extension telephone set directly to the telecommunications network and therewith enable the telephone set to immediately activate functions relating to said network.

A further technical problem is one of creating conditions which, when a peripheral extension telephone set is busy or engaged with an own connection solely within the telecommunications network, will activate an equipment-associated call-back function and be able to co-ordinate each subsequent inward call to the engaged peripheral extension telephone set within the branch exchange.

### Solution

The present invention thus takes as its starting point a telecommunications system that includes: a general telecommunicstions network to which a plurality of telephone sets are connected and where a connection can be initiated and set up by a calling party to a called telephone set via switching means belonging to said telecommunications network, a public branch exchange function or means which is related to the telecommunications network as stated in the preamble of claim 1.

With the intention of solving one or more of the aforesaid technical problems, it is proposed, in accordance with the present invention, the combination of features as stated in the characterizing part of claim 1.

### Advantages

Advantages primarily characteristic of an inventive telecommunications system reside in the provision of conditions which will enable a peripheral extension telephone belonging to a private branch exchange to be connected as an inward line in the general telecommunications network and as a network subscriber in the absence of a leased fixed line connection, and wherein measures have been taken so that said peripheral extension telephone can be provided by the branch exchange with the same services and the same options as those afforded to an extension telephone adjacent to the branch exchange and connected directly to inward lines to the branch exchange, or at least essential the same services and the same options, despite the proposed connection with the telecommunications network.

This enables telephone operations distanced from the branch exchange to be carried out without foregoing a desired service level to any appreciable extent.

### Brief Description of the Drawings

A telecommunications system that has features characteristic of the present invention will now be described in more detail with reference to the accompanying schematic drawings, in which
- Figure 1: illustrates a telecommunications system constructed in accordance with the invention, and shows a calling telephone belonging to the telecommunications network connected to a peripheral extension telephone via a private branch exchange and an equipment, said peripheral extension telephony also being connected to the telecommunications network:
- Figure 2: illustrates a switching sequence in which the peripheral extension telephone connected to the telecommunications network is switched to the private branch exchange, so as to be able to deliver service requests to said exchange, among other things;
- Figure 3: illustrates a switching option where the peripheral extension telephone connected to the telecommunications network utilises network functions solely for a direct connection to a telephone set connected to said telecommunications network;
- Figure 4: is a greatly simplified illustration of equipment belonging to the telecommunications system and connected to the private branch exchange;
- Figure 5: illustrates an embodiment in which the peripheral extension telephone may be a mobile telephone; and
- Figure 6: illustrates a switching option via a telecommunications network function when a peripheral extension telephone is busy, and where a callback function and a call queuing function provided by said equipment is available.

### Description of Embodiments at present Preferred

Figure 1 is thus a greatly simplified illustration of a telecommunications system 1 constructed in accordance with the invention.

The illustrated telecommunications system 1 includes a general or public telecommunications network 2. The telecommunications network 2 has a plurality of telephone sets, such as telephone sets 22, 23, connected thereto in a known manner, said telephone sets being subscriber telephones which have been allocated a telephone number appertaining to said network, so that the users of respective telephones are able to avail themselves of network services and functions through the medium of their respective keypads adapted for tone transmission.

These telephone sets 22, 23 can be considered to be connected directly to the telecommunications network 2, since a call initiated from the telephone set 22 produces, among other things, a call signal and dialling tone from a network-associated tone generator 2c, and since when the subscriber number of the telephone set 23 is dialled network-associated switching means 2a are activated to establish a communications path (not shown).

This connection thus differs from a fixed connection established via a leased line,

Thus, in respect of a switching function, which will be described in more detail hereinafter, a telephone set 21 can be considered to be a direct dialling telephone set belonging to the telecommunications network,

In other respects, however, the telephone set 21 operates as a peripheral extension telephone to a private branch exchange means or function 3, in the following indicated also as private branch exchange 3 which will also be described in more detail hereinafter.

One or more smaller telephone exchanges having subordinate extension telephones, such as those referenced 24 and 25, may also be connected to the network 2.

The telecommunications network 2 is constructed so that a calling telephone connected to said network, such as the telephone set 23, is able to initiate and set up a connection with a chosen, called telephone, such as a telephone set 22 or the private branch exchange 3, through the medium of switching means 2a belonging to the telecommunications network. This connection procedure is well and will not therefore be described in detail here,

The invention is based on the exploitation of a private branch exchange function 3 with a number of direct dialling extension telephones, such as the telephone set 31.

By a direct dialing extension telephone is meant that the telephone is connected directly to the private branch exchange 3 so that an initiated can will result, among other things, in a call signal and a dialing tone from a tone generator (not shown) in the branch exchange, via the extension line.

Although the present invention is illustrated in the following with the aid of a private branch exchange 3 which is connected to the public telecommunications network via lines 3a and 3c, it will be obvious to the person skilled in this art that the exchange function 3 can be integrated within the control equipment and the network functions.

In the embodiment of the invention illustrated in Figure 1 there is exploited a private branch exchange 3 which is connected to the communications network via inward lines 3a and which is connected via outward ports or lines 3b on the branch exchange to inward ports or lines for equipment 4a which includes switching functions among other things and the outward ports or lines 4b of which are connected to the telecommunications network 2 via the branch exchange 3 and its lines 3c.

The function of the invention could very well be implemented via lines 4b' connected directly between the equipment 4 and the network 2.

More particularly, the outward ports 3b are related to extension telephones so that the signal on a port implemented by a time slot represents one extension telephone and signals on another port implemented by another time slot represents another extension telephone, and so on.

The private branch exchange 3 also includes internal storage devices where a first storage area can be considered to represent prevailing conditions for a first extension telephone, a second storage area can be considered to represent prevailing conditions for another extension telephone, and so on.

The storage area for an extension telephone set also contains activated interception services for said extension telephone, together with other information significant to the extension telephone concerned.

The branch exchange control system is adapted to perform certain necessary functions in accordance with information stored in the storage area.

Thus, in the illustrated case, the lines comprise branch exchange outward ports 3b, one for each extension telephone, connected to corresponding inward ports 4b on the equipment 4 via signal transmission means, such as pairs of conductors or coaxial cables,

The invention is based on the connection of one or more peripheral extension telephones belonging to the branch exchange 3 to the telecommunications network 2. In Figure 1, only one peripheral extension telephone 21 belonging to the branch exchange 3 is shown connected to the telecommunications network 2 as a typical direct dialling subscriber telephone (such as 22 and 23) adapted to the telecommunications network (this means that this extension telephone 21 cannot be considered to be connected directly to the branch exchange). The line 21 a belonging to the peripheral extension telephone 21 is connected to the network 2 as a subscriber in a known way, and has therefore been allocated its own network subscriber number.

The invention will now be described and explained initially with reference to a few chosen switching examples.

### A call from a network-connected telephone 23 to a peripheral extension telephone 21 belonging to the private branch exchange

In the case of the embodiment illustrated in Figure 1, the user of the telephone 23 lifts the handset and obtains a dialing tone from a circuit 2c belonging to the telecommunications network. The user then either dials a group number applicable to the branch exchange 3 or a branch exchange extension number for direct connection to the extension telephone.

in the former case, the call is connected to a telephone operator in the branch exchange, who answers the call and sets up a connection to the extension telephone 21 as requested.

If the storage area for the called extension telephone 21 indicates an interception service, the telephone operator will pass this information on to the calling party.

In the latter of the two above-mentioned cases, the call is connected in the branch exchange to the dialled extension number 21 without the assistance of a telephone operator.

If it is assumed initially that the dialled extension number is the number of the peripheral extension telephone 21 and the storage area in the branch exchange contains no information concerning a diversion, temporary transfer or any other service, the call is connected to a telephone operator in the case of a group number who, after receiving a message over the connection line 23a, 3a, forwards the call to the number of the extension telephone 21 in the branch exchange.

Relevant information in the storage area concerning the extension telephone 21 is transformed via its time slot to the equipment 4, which transposes the transmitted extension number 21 to a subscriber number belonging to the telecommunications network, namely the number applicable to the extension telephone 21, whereafter the equipment 4 is able to initiate a call to the subscriber number concerned.

Because the called extension telephone 21 is, in this case, a peripheral extension telephone connected to the public telecommunications network via its subscriber number, the equipment 4 transforms the extension number to a network subscriber number in a block 47.

The equipment 4 now initiates, in a known manner, a call to the telecommunications network 2, which connects the lines 3c and 21 a via switching means 2a belonging to the network.

The equipment 4 is now able to connect the line 3a with the line 3c via the branch exchange 3, and therewith also connects the sound channels for tone and speech message transmission.

When the called extension telephone 21 answers the call, the equipment 4 is able to activate a signal structure corresponding to a B-response.

The earlier known private branch exchange MD 110 includes an interface that has a number of ports 3b where signal exchange is structured in accordance with a CAS protocol and is therewith adapted for digital signals and has a port-associated time slot for each extension telephone set.

It will be evident, to the person skilled in this art that other considerations and solutions will be required for types of private branch exchanges 3, although these considerations and solutions will not be described here for the sake of simplicity.

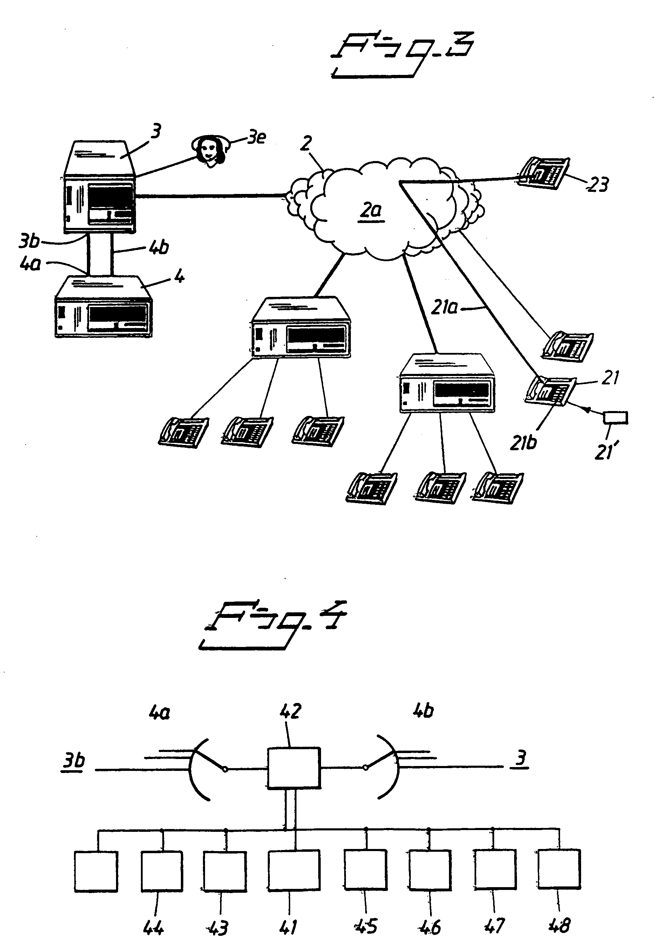

When a time slot on a port for the extension telephone 21 arrives at the equipment 4, the equipment 4 sets up a connection to the subscriber number allocated to the peripheral extension telephone 21 through the telecommunications network 2, via a computer unit 41 and a switching block 42 in accordance with Figure 4, without needing to first send a B-response to an inward can from the telephone 23.

Since certain telecommunications networks permit a connection for signal exchange to be made through the network without a B-response, it is proposed that this option is utilised primarily.

If the network requires a B-response in respect of such a connection, relevant steps are taken to enable such a B-response to be generated.

When speech messages or the like are transmitted over an established connection, a B-response to the network 2 will, of course, be required.

As shown in Figure 4. an inward call, on a port with its time slot, is connected to a sound channel belonging to the telecommunications network via said equipment 4, wherewith a tone or speech message generated in the telecommunications network 2 is delivered to the calling party 23.

When the call on the peripheral extension telephone 21 is answered, the equipment 4 generates a B-response instead of the extension telephone 21, via a block 43.

Upon termination of the call, the connection set-up via the branch exchange 3 can be released either from the extension telephone 21 or the telephone 23 or from both, this latter option being effected by a double clearing function.

### A call from a peripheral extension telephone 21 to the private branch exchange 3

When the user of the peripheral extension telephone 21 (Figure 2) wishes to make a call to the branch exchange 3, he/she lifts the telephone handset and therewith activates automatically a network-related function with which a switching path 21a-3d is established in the network to a dialled subscriber number belonging to said network and applicable to the branch exchange 3.

This subscriber number shall be a direct dial-in number, so that the call can be connected directly to the branch exchange inward circuits appertaining to the extension telephone 21.

When the call arrives at this direct dial-in number, the call is switched in the branch exchange so that the dialling tone from said branch exchange can be sent to the peripheral extension telephone 21 via the connection 3d-21a established through the network 2.

It will be clearly apparent from this that the peripheral extension telephone 21 is connected directly to the branch exchange 3 via a network-related switching path 21a-3d, and that said peripheral extension telephone 21 is able to communicate with devices and its own storage area in the branch exchange 3 via said switching path as a direct dial-in extension telephone.

If the user of the extension telephone 21 wishes to establish a telephone connection with some other extension telephone or with a telephone belonging to the telecommunications network, this is effected in a known manner by dialling a desired number on the telephone keypad 21b.

Messages sent from the peripheral extension telephone 21 over the switching path 21a-3d with respect to desired services can be stored in the branch exchange 3 in the storage area belonging to the subscriber telephone and are therewith readily accessible to another call arriving at the branch exchange from a direct dial-in extension telephone 31 or from a telephone 23 belonging to the telecommunications network.

More specifically, and as shown in Figure 2, such a connection is established from the peripheral extension telephone 21 via the conductor or line 21a and through the telecommunications network 2, the line 3d to the branch exchange 3. via a port 3e, a port 4b, the equipment 4, a port 4a, a port 3b and to the branch exchange 3 and so that messages concerning selected services, such as a temporary transfer service, an interception service, ACD and the like can be entered into and stored in the branch exchange 3 (and in the equipment 4).

On or more service significant codes, such as temporary transfer code, an interception code or some other chosen function associated with the branch exchange is/are activated through the keypad 21b of the peripheral extension telephone 21.

### Call to a peripheral extension telephone 21 that has requested one or more services

A can arriving at the branch exchange 3 and directed to a peripheral extension telephone 21 in respect of which information concerning one or more requested services is stored in said exchange, is expedited by reading the information stored in the storage area of said telephone.

Branch exchange functions are now actuated so as to effect the switching processes necessary to activate requested services.

For instance, there can be activated within the branch exchange a relevant connection through said exchange 3 or through the telecommunications network 2 via the equipment 4, or the equipment can be activated to deliver a pre-programmed response itself.

A telephone 23 belonging to the telecommunications network, or an extension telephone 31 belonging to a private branch exchange used to initiate a call to a peripheral extension telephone 21 connected to the network also activates means within the branch exchange 3.

The storage area for the extension telephone 21 now contains all information relating to requested services.

### A call to a peripheral extension telephone 21 is forwarded

it is assumed here that the storage area of the peripheral extension telephone 21 includes a call forwarding request in the branch exchange 3, this request having been entered either by dialling a code on the own telephone 21 or through the medium of a telephone operator 3e.

In the event of an inward can to the extension telephone 21, the branch exchange establishes that the call forwarding service is activated, together with information relating to an extension number or an extension number to the telephone to which the call shall be forwarded.

When this telephone is a direct dial-in extension telephone 31, the call is switched internally within the branch exchange 3.

If the telephone is a peripheral extension telephone (similar to telephone 21), the branch exchange 3 sends information to the equipment 4 on the time slot applicable to this peripheral telephone and the equipment 4 is activated as earlier described.

In both cases call-information appears on one of the ports 3b and can be sensed or read in a block 44 in the equipment 4, wherewith the equipment 4 establishes through the telecommunications network 2 a connection (via block 42) to a subscriber number to which the call shall be forwarded as requested by telephone 22, without giving a B-response to the inward call.

### A call to a peripheral extension telephone 21 is intercepted

It is assumed in this case that the peripheral extension telephone 21 has requested an interception service in the branch exchange 3 in a known manner, either by dialing a code on the own telephone 21 or through the medium of a telephone operator 3e.

When a call directed to the extension telephone 21 arrives, the branch exchange establishes that the intercept service has been activated and also information concerning the measures to be taken.

The branch exchange 3 evaluates and initiates activation of a requested procedure, which may be to connect the call to an answering system within the equipment 4, or to a telephone operator 3e, via the port 3b.

By virtue of the switching facility according to Figure 2, the extension telephone 21 is now able to enter or inhibit a desired service function, such as an interception function, temporary transfer function or some other exchange service function, either via a branch exchange telephone operator 3e or by dialing a code on the own telephone 21, this information being entered into or deleted from the information content on the storage area for the extension telephone 21, as applicable. Processing corresponding to a chosen function can be effected in a block 45 in the equipment 4.

In accordance with one particular embodiment of the invention, the peripheral extension telephone 21 belonging to the branch exchange 3 may be so connected to the telecommunications network 2 and so utilise the network function 2b that when the telephone receiver is lifted or the telephone activated in some other way, a connection is automatically and immediately set up through the telecommunications network 2 to a pre-programmed subscriber number, which is a direct dial-in number and belongs to the branch exchange 3 and/or the equipment 4.

In this particular application of the invention, it may be beneficial to select the switching path to the equipment 4 via the branch exchange 3 as frustrated in Figure 2 and described in more detail above.

Because of this arrangement the peripheral extension telephone 21 will be perceived by the calling party as being constantly in direct connection with the branch exchange 3 immediately a call is desired, and measures of the nature described below are necessary in order to release this automatic connection.

The equipment 4 may also be designed to ascertain in a block 46 which extension telephone 31 or telephone 23 is the calling telephone, such as via a direct dial-in number (or by evaluating an A-number), and initiate setting up of a connection to the called telephone, deliver a B-response and connect-up sound channels, The calling party therewith receives a tone message, which may be generated in the branch exchange 3.

In the case of a calling extension telephone 31, a connection is established to a called extension telephone through the branch exchange 3, or to a network telephone via the equipment 4, or to a peripheral extension telephone belonging to said network.

In order to enables the extension telephone 21 connected in a known manner to the telecommunications network 2 to exploit network functions directly, it is proposed that said function of automatically instigating a connection to a pre-programmed number is inhibited when the telephone handset is lifted and a code 21' is dialed, and that the extension telephone 21 then remains connected directly to the network 2 as a telephone through which network-reiated functions can be activated.

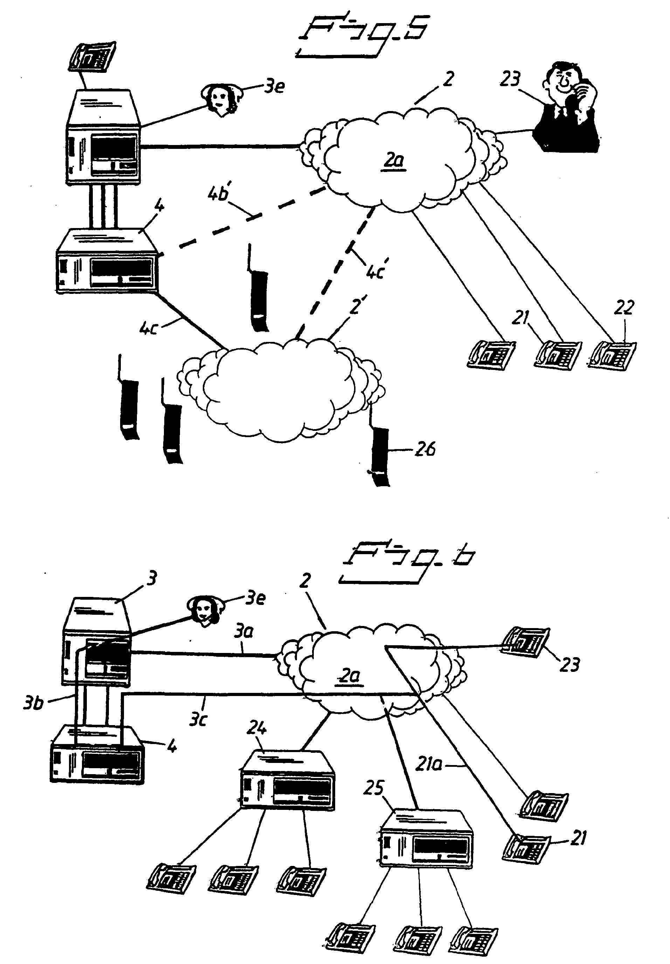

A network-adapted switching path between the peripheral extension telephone 21 and a telephone 23 in accordance Figures 3 and 6 cannot be detected by the branch exchange 3 until a connection initiated by said equipment 4 through the network 2 indicates via network-associated equipment that the line is busy and produces a line busy indication. This line busy indication was thus not indicated in the branch exchange 3.

In view of this, there is provided in accordance with the invention (Figure 6) whereby when a peripheral extension telephone 21 is busy, a call-back and/or a co-ordinating function is activated in block 48 of said equipment 4, via a network-connected switching path and in response to a call from said equipment 4,

The co-ordinating function may conveniently be included in the branch exchange 3.

Figure 5 illustrates schematically how a mobile telephone 26 can be allocated the function of a peripheral extension telephone (21).

The mobile telephone 26 is in radio connection with a mobile telecommunications network 2' whose base stations or other equipment are connected to said equipment 4 either directly or indirectly via a connection 4c and/or to said telecommunications network. 2 via a connection 4c', such ratio connections being known to the art.

It is preferably preferred that each switching path can be set up via the network 2 without needing to generate a network-rotated B-response.

It can be mentioned that the functions included in the branch exchange 3 can very well be assigned to and induced in network-related function, such as the services offered by the designation-Centrex-.

Those persons conversant with this system will realise that given codes from the peripheral extension telephone 21 over a line connected through the telecommunications network 2 will be able to activate desired network functions, such as when pressing an R-button.

However, it is possibly to enable such actuation to be prevented, by activating a unique combination of further codes instead of actuating the R-button (which activates the function within the telecommunications network) thereby being able to communicate with and actuate the branch exchange 3 without affecting the network-adapted functions in a harmful way.

Another significant feature of the present invention is that when the memory area of the extension telephone 21 induces intercept information to an extension telephone 24, the branch exchange 3 activates the storage area for the extension telephone 24 and activates the time slot applicable to said extension telephone.

The equipment 4 now establishes through the network 3 a connection determined by the time slot, which means that insignificant intelligence is required with regard to the equipment 4 and that the predominantly intelligent connection is effected within the branch exchange 3.

It will be understood that the invention is not restricted to the aforedescribed and illustrated exemplifying embodiments thereof and that modifications can be made within the scope of the following claims,

## Claims

1. A telecommunications system (1) that includes: a general telecommunications network (2), to which a number of telephone sets (21, 22, 23) are connected and in which a calling telephone set (23) is able to initiate and establish, via network related switching means (2a) a connection with a called telephone set (22, 23), a private branch exchange means or function (3) related to the telecommunications network, (2) said function (3) capable of being connected, via an outward extension telephone port or line (3b), to an inward port or line (4a) for an equipment (4) whereby a peripheral extension telephone set (21), belonging to said private branch exchange means or function (3) and to said equipment (4) is connected to the telecommunications network (2), as a network adapted telephone set (23)
**characterized in that** said equipment (4) includes switching functions and that an equipment-related (4) outward port or line (4b) is connected via said private branch exchange means or function (3) or directly (4b') to the telecommunications network (2), so that branch exchange services can be offered to said peripheral extension telephone set (21).

2. A system according to claim 1, further **characterized in that** the peripheral extension telephone set (21) is adapted to connect to a private branch exchange means or function (3) via a switching path, related to the telecommunications network (2), and adapted to communicate with said private branch exchange means or function (3), as a direct dial-in extension telephone set, via said switching path.

3. A system according to claim 2, further **characterized in that** a switching path for signal transmission is established via the telecommunications network (2) without the need of generating a branch exchange related B-response.

4. A system according to claim 1, 2 or 3, further **characterized in that** a signal, transmitted from the peripheral extension telephone set (21) over said switching path with respect to a desired service is adapted to be store in said private branch exchange means or function (3) in a storage area, specific to said peripheral extension telephone set (21), and therewith readily accessible in the event of a call to said extension telephone set (21) via the private branch exchange means or function (3) from a direct dial-in extension telephone set or from a telephone set (23) belonging to the telecommunications network (2).

5. A system according to claims 1, 2, 3 or 4, further **characterized in that** any information, relating to a selected service or selected services for each peripheral extension telephone set (21), are co-ordinated in the branch exchange means or function (3) and structured within each respective storage area.

6. A system according to any one of the preceding claims, further **characterized in that** in an absence of information in the private branch exchange means or function (3), relating to a requested service, an inward call to the private branch exchange means or function (3), directed to a peripheral extension telephone set, is forwarded to said equipment (4) and through the telecommunications network via a switching path.

7. A system according to any one of the preceding claims 1-5, further **characterized in that** an inward call within the branch exchange (3), directed to a peripheral extension telephone set (21) where information relating to one or more requested services is stored in its storage area in said private branch exchange means or function (3), is forwarded to said equipment (4), which is adapted to activate either a relevant connection or to itself deliver a response, depending on the service requested.

8. A system according to claim 7, further **characterized in that** call information resides in the occurrence of a time slot belonging to an extension telephone set.

9. A system according to claim 1, further **characterized in that** a telephone set beloging to the telecommunications network or an extension telephone set belonging to the private branch exchange means or function (3) and initiating a call to a peripheral extension telephone set (21) connected to the telecommunications network (2), is adapted to activate within branch exchange means that, in turn, is adapted to activate a port, line or time slot or some corresponding element significant to the calling extension telephone set, this activation being detected by said equipment (4).

10. A system according to claim 1 or 9, further **characterized in that** when a time slot for a peripheral extension telephone set is delivered to the equipment (4) or the like, the equipment (4) is adapted to set up a connection to a subscriber number, allocated to said peripheral extension telephone set (21), via a switching path through the telecommunications network (2).

11. A system according to claim 10, further **characterized in that** said equipment is adapted to set up the connection via said switching path, without needing to use an extensionrelated B-response.

12. A system according to claim 1 or 3, further **characterized in that** when said equipment (4) has established an inward call connection to a peripheral extension telephone set (21), a tone or speech message, is generated within the telecommunications network and is forwarded to a calling telephone.

13. A system according to claim 1, further **characterized in that** one or more service-significant codes, such as a temporary call transfer code, an interception code or some other selected function belonging to the branch exchange is/are activated via a keypad related to said peripheral extension telephone set (21).

14. A system according to any one of the preceding claims, further **characterized in that** when a called peripheral extension telephone set has initiated a response, the equipment (4) is adapted to generate a B-response for said extension telephone set.

15. A system according to claim 1 or 2, further **characterized in** the event of a call to a peripheral extension telephone set (21) related number, that has been diverted or temporarily transferred in the private branch exchange (3,4), the storage area for this telephone set includes diversion information pertaining to said extension telephone set, wherein said information is adapted to be detected and the equipment is initiated and activated in accordance with said information, such as either to set up, through the telecommunications network, a connection to a subscriber number allocated to another peripheral extension telephone set or to a telephone set belonging to the telecommunications network (2).

16. A system according to claim 15, further **characterized in that** when said equipment has controlled a connection of an inward call to a called telephone set, a calling tone or speech message, that is adapted to be generated within the telecommunications network, is sent to the calling telephone set, via a sound channel belonging to the telecommunications network (2).

17. A system according to claim 16, further **characterized in that** a switching path is established, via the telecommunications network, without generating a B-response related to said network.

18. A system according to claim 1, further **characterized in that** a temporary transfer or diversion request is adapted to be transferred to and stored in the branch exchange means or function (3) through the medium of exchange personnel, such as a telephone operator, or by dialling a code via the own telephone set.

19. A system according to claim 1, further **characterized in that** the peripheral extension telephone set, connected to the telecommunications network and belonging to the branch exchange, is adapted to utilise a function belonging to the telecommunications network (2), such as when the telephone handset is lifted or the telephone is likewise activated, set up a connection to a pre-programmed number, belonging to said branch exchange (3) and/or to said equipment (4).

20. A system according to claim 19, further **characterized in that** the switching path to the equipment (4) is here selected via the private branch exchange means or function (3).

21. A system according to claim 19, further **characterized in that** the equipment (4) establishes which an extension telephone set as a calling telephone set, a direct number in the branch exchange or an A-number in the peripheral extension telephone set or sets, connected to the telecommunications network, and thereafter initiates a connection set-up to the calling telephone set.

22. A system according to claim 21, further **characterized in that** the calling telephone set receives a tone or speech message, generated in the private branch exchange means or function (3).

23. A system according to claim 22, further **characterized in that** a switching path is set up by the branch exchange (3) and the equipment (4) without generating a B-response related to the private branch exchange means or function (3).

24. A system according to claim 1, further **characterized in that** in the event of a call, made from a direct dial-in extension telephone set a connection is established internally through the private branch exchange means or function (3) to a called extension telephone set, or a connection is initiated via said equipement (4) to a telephone set belonging to the telecommunications network (2) or to a peripheral extension telephone set belonging to said network.

25. A system according to claim 1 or 19, further **characterized in that** the function of automatically setting up a connection to a pre-programmed number is inhibited by dialling a code, when the telephone handset is lifted, wherewith the peripheral extension telephone set is connected directly to the telecommunications network as a telephone set that is able to activate network-related functions.

26. A system according to claim 1, further **characterized in that** the peripheral extension telephone set is a mobile telephone connected to a mobile telephone network, which, in turn, is connected to said telecommunications network and/or to said equipment.

27. A system according to claim 25, further **characterized in that** when a peripheral extension telephone is busy, a call-back and/or queuing function belonging to said equipment and/or to said branch exchange is/are activated via a switching path connected to the telecommunications network and in response to a call from said equipment.

## Patentansprüche

1. Telekommunikationssystem (1), welches Folgendes aufweist: ein allgemeines Telekommunikationsnetzwerk (2), mit welchem eine Anzahl von Telefonapparaten (21,22,23) verbunden ist und in welchem ein anrufender Telefonapparat (23) in der Lage ist, über eine mit dem Netzwerk verbundene Schaltenrichtung (2a) eine Verbindung mit einem angerufenen Telefonapparat (22,23) einzuleiten und hierzustellen, eine mit dem Telekommunikationssystetu (2) verbundene Nebenstellenanlageneinrichtung oder - funktion (3), wobei die Funktion (3) in der Lage ist, über einen äußeren Nebenstellenanschluss oder
- leitung (3b) mit einem inneren Anschluss oder Leitung (4a) für eine Anlage (4) verbunden zu werden, wobei ein dezentraler Nebenstellen-Telefonapparat (21), welcher zu der Nebenstellenanlageneinrichtung oder -funktion (3) und zu der Anlage (4) gehört, mit dem Telekommunikationsnetzwerk (2) als ein für das Netzwerk geeigneter Telefonapparat (23) verbunden ist,
**dadurch gekennzeichnet, dass**
die Anlage (4) Schaltfunktionen aufweist und dass ein mit der Anlage (4) verbundener äußerer Anschluss oder -leitung (4b) über die Nebenstellenanlageneinrichtung oder -funktion (3) oder direkt (4b') mit dem Telekommunikationsnetswerk (2) verbunden ist, so dass dem dezentralen Nebenstellen-Telefonapparat (21) Nebenstellendienste angeboten werden können.

2. Anlage nach Anspruch 1, weiterhin
**dadurch gekennzeichnet, dass**
der dezentrale Nebenstellen-Telefonapparat (21) geeignet ist, um mit einer Nebenstellenanlageneinrichtung oder -funktion (3) über einen mit dem Telekommunikationsnetzwerk (2) verbundenen Schaltpfad verbunden zu werden, und geeignet ist, um mit der Nebenstellenanlageneinrichtung oder -funktion (3) über den Schaltpfad als ein Durchwahl-Nebenstellentelefon zu kommunizieren.

3. Anlage nach Anspruch 2, weiterhin
**dadurch gekennzeichnet, dass**
ein Schaltpfad zur Signalübertragung über das Telekommunikationsnetzwerk (2) ohne die Notwendigkeit der Erzeugung einer nebenstellenbezogerien B-Reaktion eingerichtet ist.

4. Anlage nach Anspruch 1, 2 oder 3, weiterhin
**dadurch gekennzeichnet, dass**
ein von dem dezentralen Nebenstellen-Telefonapparat (21) über den Schaltpfad übertragenes Signal im Hinblick auf einen gewünschten Dienst geeignet ist, um in der Nebenstellenanlageneinrichtung oder -funktion (3) in einem spezifischen Speicherbereich für den dezentralen Nebenstellen-Telefonapparat (21) gespeichert zu werden, wobei es **dadurch** im Falle eines Anrufes an dem dezentralen Nebenstellen-Telefonapparat (21) über die Nebenstellenanlageneinrichtung oder -funktion (3) von einem Durchwahl-Nebenstellentelefon oder von einem zu dem Telekommunikationsnetswerk (2) gehörenden Telefonapparat (23) leicht zugänglich ist.

5. Anlage nach Anspruch 1, 2, 3 oder 4, weiterhin
**dadurch gekennzeichnet, dass**
alle Informationen, die mit einem ausgewählten Dienst oder ausgewählten Diensten für jeden dezentralen Nebenstellen-Telefonapparat (21) in Zusammenhang stehen, in der Nebenstellenanlageneinrichtung oder -funktion (3) koordiniert und innerhalb eines jeden Speicherbereiches strukturiert werden.

6. Anlage nach einem der vorangegangenen Ansprüche, weiterhin
**dadurch gekennzeichnet, dass**
bei Nichtvorhandensein von Informationen in der Nebenstellenanlageneinrichtung oder -funktion (3) über einen angeforderten Dienst ein eingehender Anruf bei der Nebenstellenanlageneinrichtung oder -funktion (3), der an einen dezentralen Nebenstellen-Telefonapparat gerichtet ist, über einen Schaltpfad zu der Anlage (4), und durch das Telekommunikationsnetzwerk weitergeleitet wird.

7. Anlage nach einem der vorangegangenen Ansprüche 1-5, weiterhin
**dadurch gekennzeichnet, dass**
ein innerhalb der Nebenstellenanlageneinrichtung (3) eingehender Anruf, der an einen dezentralen Nebenstellen-Telefonapparat (21) gerichtet ist, bei dem Informationen über einen oder mehrere angeforderte Dienste in dem Speicherbereich in der Nebenstellenanlageneinrichtung oder -funktion (3) gespeichert sind, an die Anlage (4) weitergeleitet wird, die geeignet ist, um in Abhängigkeit von dem angeforderten Dienst entweder eine betreffende Verbindung zu aktivieren oder selbst eine Reaktion auszugeben.

8. Anlage nach Anspruch 7, weiterhin
**dadurch gekennzeichnet, dass**
Anrufinformationen im Falle eines zu dem Nebenstellen-Telefonapparat gehörenden Zeitfensters vorhanden sind.

9. Anlage nach Anspruch 1,
**dadurch gekennzeichnet, dass**
ein zu dem Telekommunikationsnetzwerk gehörender Telefonapparat oder ein zu der Nebenstellenanlageneinrichtung oder -funktion (3) gehörender Nebenstellen-Telefonapparat, die einen Anruf an einen mit dem Telekommunikationsnetswerk (2) verbundenen dezentralen Nebenstellen-Telefonapparat (21) einleiten, geeignet ist, um innerhalb der Nebenstelle Einrichtungen zu aktivieren, die wiederum geeignet sind, um einen Anschloss, Leitung oder Zeitfenster oder irgendein entsprechendes Element zu aktivieren, welches für den anrufenden NebenStellen-Telefonapparat von Bedeutung ist, wobei diese Aktivierung von der Anlage (4) erkannt wird.

10. Anlage nach Anspruch 1 oder 9, weiterhin
**dadurch gekennzeichnet, dass**
wenn ein Zeitschlitz für einen dezentralen Nebenstellen-Telefonapparat an die Anlage (4) oder dergleichen ausgegeben wird, die Anlage (4) geeignet ist, um über einen Schaltpfad über das Telekommunikationsnetzwerk (2) eine Verbindung zu einer diesem dezentralen Nebenstellen-Telefonapparat (21) zugewiesenen Teilnehmernurnmer herzustellen.

11. Anlage nach Anspruch 10, weiterhin
**dadurch gekennzeichnet, dass**
die Ausrüstung geeignet ist, um die Verbindung über den Schaltpfad ohne die Notwendigkeit der Verwendung einer nebenstellenbezogenen B-Reaktion herzustellen.

12. Anlage nach Anspruch 1 oder 3, weiterhin **dadurch gekennzeichnet, das** s wenn die Anlage (4) eine Eingangsanrufverbindung zu einem dezentrale Nebenstellen-Telefonapparat (21) aufgebaut hat, eine Ton- oder Sprachmeldung innerhalb des Telekommunikationsnetzwerkes aufgebaut und an das anrufende Telefon weitergeleitet wird.

13. Anlage nach Anspruch 1, weiterhin
**dadurch gekennzeichnet, dass** einer oder mehrere dienstbezeichnende Codes wie zum Beispiel ein temporärer Anrufübertragungscode, ein Abfangeode oder eine andere ausgewählte Funktion, die zu der Nebenstellenanlageneinrichtung gehört, über ein Tastenfeld aktiviert wird/werden, welches zu dem dezentralen Nebenstellen-Telefonapparat (21) gehört.

14. Anlage nach einem der vorangegangenen Ansprüche, weiterhin
**dadurch gekennzeichnet, dass**
wenn ein angerufener dezentraler Nebenstellen-Telefonapparat eine Reaktion eingeleitet hat, die Anlage (4) geeignet ist, um eine B-Reaktion für diesen Nebenstellen-Telefonapparat zu erzeugen.

15. Anlage nach Anspruch 1 oder 2, weiterhin
**dadurch gekennzeichnet, dass**
im Falle eines Anrufes an eine mit einem dezentralen Nebenstellen-Telefonapparat (21) in Zusammenhang stehende Nummer, die umgeleitet oder vorübergehend in die Nebenstellenanlageneinrichtung (3,4) übertragen wurde, der Speicherbereich für diesen Telefonapparat die Umleitungsinformationen umfasst, die zu dem Nebenstellen-Telefonapparat gehören, wobei die Informationen geeignet sind, um erkannt zu werden, und die Anlage in Übereinstimmung mit den Informationen initiiert und aktiviert wird, um entweder über das Telekommunikationsnetzwerk eine Verbindung zu einer Teilnehmernummer, die einem anderen dezentralen Nebenstellen-Telefonapparat zugewiesen ist, oder einem zu dem Telekommunikationsnetzwerk (2) gehörenden Telefonapparat herzustellen.

16. Anlage nach Anspruch 15, weiterhin
**dadurch gekennzeichnet, dass**
wenn die Ausrüstung eine Verbindung eines eingehenden Anrufes zu einem angerufenen Telefonapparat kontrolliert hat, ein Rufton oder eine Sprachmeldung, die geeignet ist, um innerhalb des Telekommunikationsnetzwerkes erzeugt zu werden, über einen zu dem Telekommunikationsnetswerk (2) gehörenden Tonkanal zu dem anrufenden Telefonapparat gesendet wird.

17. Anlage nach Anspruch 16, weiterhin
**dadurch gekennzeichnet, dass**
ein Schaltpfad über das Telekommunikationsnetzwerk ohne Erzeugung einer auf dieses Netzwerk bezogenenen B-Reaktion aufgebaut wird.

18. Anlage nach Anspruch 1, weiterhin
**dadurch gekennzeichnet, dass**
eine temporäre Übertragung- oder Umleitungsanforderung geeignet ist, um mittels Nebenstellenpersonal wie zum Beispiel einen Telefonisten oder durch die Wahl eines Codes über den eigenen Telefonapparat zu der Nebenstellenanlageneinrichtung oder - funktion (3) übertragen und dort gespeichert zu werden.

19. Anlage nach Anspruch 1, weiterhin
**dadurch gekennzeichnet, dass**
der mit dem Telekommunikationsnetswerk verbundene dezentrale Nebenstellen-Telefonapparat, der zu der Nebenstellenanlageneinrichtung gehört, geeignet ist, um eine zu dem Telekommunikationsnetzwerk (2) gehörende Funktion zu verwenden, wie zum Beispiel dass dann, wenn der Telefonhörer abgehoben oder das Telefon auf ähnliche Art aktiviert wird, eine Verbindung mit einer zuvor einprogrammierten Nummer aufgebaut wird, die zu der Nebenstellenanlageneinrichtung (3) und/oder zu der Anlage (4) gehört.

20. Anlage nach Anspruch 19, weiterhin
**dadurch gekennzeichnet, dass**
der Schaltweg zu der Anlage (4) hierbei über die Nebenstellenanlageneinrichtung oder -funktion (3) ausgewählt wird.

21. Anlage nach Anspruch 19, weiterhin
**dadurch gekennzeichnet, dass**
die Anlage (4) feststellt, welcher Nebenstellen-Telefonapparat ein anrufender Telefonapparat, eine Durchwahlnummer in der Nebenstellenaulageneinrichtung oder eine A-Nummer in dem dezentralen Nebenstellen-Telefonapparat oder apparaten, die mit dem Telekommunikationsnetzwerk verbunden, sind, ist und danach einen Verbindungsaufbau zu dem anrufenden Telefonapparat einleitet.

22. Anlage nach Anspruch 21, weiterhin
**dadurch gekennzeichnet, dass**
der anrufende Telefonapparat eine in der Nebenstellenanlageneinrichtung oder -funktion (3) erzeugte Ton- oder Sprachmeldung empfängt.

23. Anlage nach Anspruch 22, weiterhin
**dadurch gekennzeichnet, dass**
ein Schaltweg durch die Nebenstellenanlageneinrichtung (3) und die Ausrüstung ohne Erzeugung einer mit der Nebenstellenanlageneinrichtung oder - funktion (3) in Zusammenhang stehenden B-Reaktion aufgebaut wird.

24. Anlage nach Anspruch 1, weiterhin
**dadurch gekennzeichnet, dass**
im Falle eines Anrufe, der von einem Durchwahl-Nebenstellentelefonapparat erfolgt, über die Nebenstellenanlageneinrichtung oder -funktion (3) eine interne Verbindung mit einem angerufenen Nebenstellen-Telefonapparat aufgebaut wird, oder dass eine Verbindung über die Anlage (4) mit einem zu dem Telekommunikationsnetzwerk (2) gehörenden Telefonapparat oder mit einem zu dem Netzwerk gehörenden Nebenstellentelefonapparat aufgebaut wird.

25. Anlage nach Anspruch 1 oder 19, weiterhin
**dadurch gekennzeichnet, dass**
die Funktion des automatischen Aufbaus einer Verbindung mit einer zuvor einprogrammierten Nummer durch Wählen eines Codes verhindert wird, wenn der Telefonhörer abgehoben wird, wodurch der dezentrale Nebenstellen-Telefonapparat direkt mit dem Telekommunikationsnetzwerk als ein Telefonapparat verbunden ist, der in der Lage ist, netzwerkbezogene Funktionen zu aktivieren.

26. Anlage nach Anspruch 1, weiterhin
**dadurch gekennzeichnet, dass**
der dezentrale Nebenstellen-Telefonapparat ein mit einem Mobiltelefonnetswerk verbundener Mobiltelefonapparat ist, der wiederum mit dem Telekommunikationsnetzwerk und/oder mit der Anlage verbunden ist.

27. Anlage nach Anspruch 25, weiterhin
**dadurch gekennzeichnet, dass**
wenn ein dezentraler Nebenstellen-Telefonapparat belegt ist, eine zu der Anlage und/oder zu der Nebenstellenanlageneinrichtung gehörende Rückruf - und/oder Warteschleifenfunktion über einen mit dem Telekommunikationsnetswerk verbundenen Schaltpfad und als Reaktion auf einen Anruf von der Anlage aktiviert wird.

## Revendications

1. Système de télécommunication (1) qui comprend : un réseau général de télécommunication (2), auquel un nombre d'appareils téléphoniques (21, 22, 23) sont connectés, et dans lequel un appareil téléphonique appelant (23) est capable d'initier et d'établir, par l'intermédiaire de moyens de commutation (2a) connexes au réseau, une connexion avec un appareil téléphonique appelé (22,23), un moyen ou une fonction d'autocommutateur privé (3) connexe au réseau de télécommunication (2), ladite fonction (3) étant capable d'être connectée, par intermédiaire d'un point d'accès ou d'une ligne téléphonique supplémentaire sortant (3b), à un point d'accès ou une ligne entrant (4a) pour un équipement (4), moyennant quoi un appareil téléphonique supplémentaire périphérique (21), appartenant audit moyen ou à ladite fonction d'autocommutateur privé (3) et audit équipement (4) est connecté au réseau de télécommunication (2), en tant qu'appareil téléphonique (23) adapté au réseau, **caractérisé en ce que** ledit équipement (4) comprend des fonctions de commutation et un point d'accès ou ligne sortant (4b) connexe à l'équipement (4) est connecté par l'intermédiaire dudit moyen ou de ladite fonction d'autocommutateur privé (3) ou directement (4b') au réseau de télécommunication (2), de sorte que des services d'autocommutateur puissent être offerts audit appareil téléphonique supplémentaire périphérique (21).

2. Système selon la revendication 1, **caractérisé en outre en ce que** l'appareil téléphonique supplémentaire périphérique (21) est adapté pour se connecter à un moyen ou une fonction d'autocommutateur privé (3) par l'intermédiaire d'un itinéraire en commutation, connexe au réseau de télécommunication (2) et adapté pour communiquer avec ledit moyen ou ladite fonction d'autocommutateur privé (3), en tant qu'appareil téléphonique supplémentaire d'accès direct, par l'intermédiaire dudit itinéraire en commutation.

3. Système selon la revendication 2, **caractérisé en outre en ce qu'**un itinéraire en commutation pour une transmission de signaux est établi par l'intermédiaire du réseau de télécommunication (2) sans le besoin de générer une réponse B connexe à l'autocommutateur.

4. Système selon la revendication 1, 2 ou 3, **caractérisé en outre en ce qu'**un signal, transmis à partir de l'appareil téléphonique supplémentaire périphérique (21) sur ledit itinéraire en commutation par rapport à un service souhaité est adapté pour être stocké dans ledit moyen ou ladite fonction d'autocommutateur privé (3) dans une zone de stockage, spécifique audit appareil téléphonique supplémentaire périphérique (21), et avec celui-ci facilement accessible dans le cas d'un appel vers ledit appareil téléphonique supplémentaire (21) par l'intermédiaire du moyen ou de la fonction d'autocommutateur privé (3) à partir d'un appareil téléphonique supplémentaire d'accès direct ou d'un appareil téléphonique (23) appartenant au réseau de télécommunication (2).

5. Système selon les revendications 1, 2, 3 ou 4, **caractérisé en outre en ce que** de quelconques informations, concernant un service sélectionné ou des services sélectionnés pour chaque appareil téléphonique supplémentaire périphérique (21), sont coordonnées dans le moyen ou la fonction d'autocommutateur (3) et structurées au sein de chaque zone respective de stockage.

6. Système selon l'une quelconque des revendications précédentes, **caractérisé en outre en ce que**, en l'absence d'informations dans le moyen ou la fonction d'autocommutateur privé (3), concernant un service demandé, un appel entrant vers le moyen ou la fonction d'autocommutateur privé (3), dirigé vers un appareil téléphonique supplémentaire périphérique, est transféré audit équipement (4) et à travers le réseau de télécommunication par l'intermédiaire d'un itinéraire en commutation.

7. Système selon l'une quelconque des revendications précédentes 1 à 5, **caractérisé en outre en ce qu'**un appel entrant au sein de l'autocommutateur (3), dirigé vers un appareil téléphonique supplémentaire périphérique (21) où des informations concernant un ou plusieurs services demandés sont stockées dans sa zone de stockage dans ledit moyen ou ladite fonction d'autocommutateur privé (3), est transféré audit équipement (4), qui est adapté pour activer une connexion pertinente ou délivrer lui-même une réponse, suivant le service demandé.

8. Système selon la revendication 7, **caractérisé en outre en ce que** des informations d'appel résident dans l'occurrence d'un intervalle de temps appartenant à un appareil téléphonique supplémentaire.

9. Système selon la revendication 1, **caractérisé en outre en ce qu'**un appareil téléphonique appartenant au réseau de télécommunication ou un appareil téléphonique supplémentaire appartenant au moyen ou à la fonction d'autocommutateur privé (3) et initiant un appel vers un appareil téléphonique supplémentaire périphérique (21) connecté au réseau de télécommunication (2) est adapté pour s'activer au sein de moyens d'autocommutateur qui, à leur tour, sont adaptés pour activer un point d'accès, une ligne ou un intervalle de temps ou un certain élément correspondant important pour l'appareil téléphonique supplémentaire appelant, cette activation étant détectée par ledit équipement (4).

10. Système selon la revendication 1 ou 9, **caractérisé en outre en ce que**, lorsqu'un intervalle de temps pour un appareil téléphonique supplémentaire périphérique est délivré à l'équipement (4) ou analogue, l'équipement (4) est adapté pour établir une connexion à un numéro abonné, attribué audit appareil téléphonique supplémentaire périphérique (21), par l'intermédiaire d'un itinéraire en commutation à travers le réseau de télécommunication (2).

11. Système selon la revendication 10, **caractérisé en outre en ce que** ledit équipement est adapté pour établir la connexion par l'intermédiaire dudit itinéraire en commutation, sans devoir utiliser une réponse B connexe à l'appareil téléphonique supplémentaire,

12. Système selon la revendication 1 ou 3, **caractérisé en outre en ce que**, lorsque ledit équipement (4) a établi une connexion d'appel entrant à un appareil téléphonique supplémentaire périphérique (21), une tonalité ou un message vocal est généré au sein du réseau de télécommunication et est transféré à un téléphone appelant.

13. Système selon la revendication 1, **caractérisé en outre en ce qu'**un ou plusieurs codes importants pour le service, tels qu'un code de transfert d'appel temporaire, un code d'interception ou une certaine autre fonction sélectionnée appartenant à l'autocommutateur, est/sont activé(s) par l'intermédiaire d'un clavier connexe audit appareil téléphonique supplémentaire périphérique (21).

14. Système selon l'une quelconque des revendications précédentes, **caractérisé en outre en ce que** lorsqu'un appareil téléphonique supplémentaire périphérique appelé a initié une réponse, l'équipement (4) est adapté pour générer une réponse B pour ledit appareil téléphonique supplémentaire.

15. Système selon la revendication 1 ou 2, **caractérisé en outre en ce que**, dans le cas d'un appel d'un numéro connexe à l'appareil téléphonique supplémentaire périphérique (21), qui a été dérivé ou transféré temporairement dans l'autocommutateur privé (3,4), la zone de stockage pour cet appareil téléphonique comprend des informations de dérivation concernant ledit appareil téléphonique supplémentaire, dans lequel lesdites informations sont adaptées pour être détectées et l'équipement est initié et activé, selon lesdites informations, afin d'établir, à travers le réseau de télécommunication, une connexion à un numéro d'abonné attribué à un autre appareil téléphonique supplémentaire périphérique ou à un appareil téléphonique appartenant au réseau de télécommunication (2).

16. Système selon la revendication 15, **caractérisé en outre en ce que**, lorsque ledit équipement a contrôlé une connexion d'un appel entrant à un appareil téléphonique appelé, une tonalité d'appel ou un message vocal, qui est adapté pour être généré au sein du réseau de télécommunication, est envoyé à l'appareil téléphonique appelant, par l'intermédiaire d'une voie radiophonique appartenant au réseau de télécommunication (2).

17. Système selon la revendication 16, **caractérisé en outre en ce qu'**un itinéraire en commutation est établi, par intermédiaire du réseau de télécommunication, sans générer de réponse B connexe audit réseau.

18. Système selon la revendication 1, **caractérisé en outre en ce qu'**une demande de transfert ou dérivation temporale est adaptée pour être transférée au ou à la, et stockée dans le moyen ou la, fonction d'autocommutateur (3) par l'intermédiaire de personnel de central, tel qu'un opérateur, ou en composant un code par l'intermédiaire de l'appareil téléphonique en question.

19. Système selon la revendication 1, **caractérisé en outre en ce que** l'appareil téléphonique supplémentaire périphérique connecté au réseau de télécommunication et appartenant à l'autocommutateur, est adapté pour utiliser une fonction appartenant au réseau de télécommunication (2), telle que, lorsque le combiné est décroché ou le téléphone est activé de façon similaire, établir une connexion à un numéro préprogrammé, appartenant audit autocommutateur (3) et/ou audit équipement (4).

20. Système selon la revendication 19, **caractérisé en outre en ce que** l'itinéraire en commutation vers l'équipement (4) est ici sélectionné par l'intermédiaire du moyen ou de la fonction d'autocommutateur privé (3).

21. Système selon la revendication 19, **caractérisé en outre en ce que** l'équipement (4) détermine l'appareil téléphonique supplémentaire qui est un appareil téléphonique appelant, un numéro direct dans l'autocommutateur ou un numéro A dans l'appareil ou les appareils téléphonique(s) supplémentaire(s) périphérique(s), connecté(s) au réseau de télécommunication, et, après cela, initie un établissement de connexion à l'appareil téléphonique appelant.

22. Système selon la revendication 21, **caractérisé en outre en ce que** l'appareil téléphonique appelant reçoit une tonalité ou un message vocal, généré dans le moyen ou la fonction d'autocommutateur privé (3).

23. Système selon la revendication 22, **caractérisé en outre en ce qu'**un itinéraire en commutation est établi par l'autocommutateur (3) et l'équipement (4) sans générer de réponse B connexe au moyen ou à la fonction d'autocommutateur privé (3).

24. Système selon la revendication 1, **caractérisé en outre en ce que**, dans le cas d'un appel réalisé à partir d'un appareil téléphonique supplémentaire d'accès direct, une connexion est établie de façon interne à travers le moyen ou la fonction d'autocommutateur privé (3) à un appareil téléphonique supplémentaire appelé, ou une connexion est initiée par l'Intermédiaire dudit équipement (4) à un appareil téléphonique appartenant au réseau de télécommunication (2) ou à un appareil téléphonique supplémentaire périphérique appartenant audit réseau.

25. Système selon la revendication 1 ou 19, **caractérisé en outre en ce que** la fonction consistant à établir automatiquement une connexion à un numéro préprogrammé est empêchée en composant un code lorsque le combiné est décroché, avec quoi l'appareil téléphonique supplémentaire périphérique est connecté directement au réseau de télécommunication en tant qu'appareil téléphonique qui est capable d'activer des fonctions connexes au réseau.

26. Système selon la revendication 1, **caractérisé en outre en ce que** l'appareil téléphonique supplémentaire périphérique est un téléphone mobile connecté à un réseau téléphonique mobile, qui, à son tour, est connecté audit réseau de télécommunication et/ou audit équipement.

27. Système selon la revendication 25, **caractérisé en outre en ce que**, lorsqu'un téléphone supplémentaire périphérique est occupé, une fonction de rappel et/ou de mise en file d'attente appartenant audit équipement et/ou audit autocommutateur est/sont activée(s) par l'intermédiaire d'un itinéraire en commutation connecté au réseau de télécommunication et en réponse à un appel dudit équipement.
